# EUROPEAN PATENT APPLICATION

(11) **EP 2 429 164 A1**
(43) Date of publication of application: **14.03.2012**
(21) Application number: 11180552.9
(22) Date of filing: 08.09.2011
(51) Int. Cl.: H04N 1/00

(54) **Universal Facsimile Engine**

(30) Priority: 08.09.2010 US 877965
(71) Applicant: LSI Corporation, Milpitas, CA 95035 (US)
(72) Inventor: Chen, Ximing, Ringoes, NJ New Jersey 08551 (US); Cohen, Herbert B, Allentown, PA Pennsylvania 18103 (US); Gurnavage, James M, Nazareth, PA Pennsylvania 18064 (US)
(74) Representative: Williams, David John

(57) **Abstract**

A facsimile apparatus includes a user interface operative to facilitate communications between the apparatus and at least one user application in operative communication with the apparatus, and a network interface operative to facilitate communications between the apparatus and at least one of a plurality of communications networks coupled to the apparatus. The apparatus further includes a controller connected to the user interface and network interface. The controller is operative in a first mode to communicate with a first one of the communications networks using a first protocol and is operative in at least a second mode to communicate with a second one of the communications networks using a second protocol.

## Description

### Field of the Invention

The present invention relates generally to the electrical, electronic, and computer arts, and more particularly relates to facsimile communications.

### Background of the Invention

Despite efforts to become a paperless society and regardless of the prevalence of email communications, facsimile (or fax) transmission of printed materials (e.g., text, photographs, or the like) remains vital, particularly for business users. One reason for the continued popularity of faxes is that, unlike email attachments or digital signatures, the signature on a fax document is legally binding. Moreover, fax documents retain the format of the original source document and are virtually uneditable.

A traditional analog fax generally involves the transmission of scanned-in printed material (text or images), usually to a telephone number associated with a printer or other output device via a public switched telephone network (PSTN), as specified, for example, in the International Telecommunication Union (ITU) T.30 standard (see, e.g., ITU-T Recommendation T.30, Series T: Terminals for Telematic Services, Procedures for Document Facsimile Transmission in the General Switched Telephone Network, Sept. 2005, the disclosure of which is incorporated by reference herein in its entirety for all purposes). The original source document is scanned in by the fax machine, which treats the contents as a single fixed graphic image, converting it to a bitmap. Once in this digital form, the information is transmitted as electrical signals through the telephone system. The receiving fax machine reconverts the coded image and prints a paper copy of the document.

As the transmission of voice over the internet, using voice over internet protocol (VoIP) technology, permeates private and public organizations, such organizations find it desirable to leverage the value and convenience of their single, distributed IP communications network. Since fax transmissions generally utilize the same facilities as voice communications, it is becoming increasingly popular to implement fax transmissions using facsimile over internet protocol (FoIP) as specified, for example, in the ITU T.38 standard (see, e.g., ITU-T Recommendation T.38, Series T: Terminals for Telematic Services, Facsimile - Group 3 Protocols, Procedures for Real-time Group 3 Facsimile Communication Over IP Networks, April 2007, the disclosure of which is incorporated by reference herein in its entirety for all purposes).

### Summary of the Invention

Conventionally, analog fax engines are used by analog fax machines to send and receive images over a PSTN connection, while T.38-based IP fax engines are used in IP-aware fax machines and FoIP media gateways. Principles of the invention, in illustrative embodiments thereof, advantageously enable fax machine vendors to use a single fax engine operative to transmit/receive fax data (e.g., representative of printed materials -- text, images, or the like) using both PSTN and IP network protocols. A simple AT command set is included, according to aspects of the invention, for controlling the operation of the new fax engine.

In accordance with one embodiment of the invention, a facsimile apparatus includes a user interface operative to facilitate communications between the apparatus and at least one user application in operative communication with the apparatus, and a network interface operative to facilitate communications between the apparatus and at least one of a plurality of communications networks coupled to the apparatus. The apparatus further includes a controller connected to the user interface and network interface. The controller is operative in a first mode to communicate with a first one of the communications networks using a first protocol and is operative in at least a second mode to communicate with a second one of the communications networks using a second protocol.

These and other features, objects and advantages of the present invention will become apparent from the following detailed description of illustrative embodiments thereof, which is to be read in connection with the accompanying drawings.

### Brief Description of the Drawings

The following drawings are presented by way of example only and without limitation, wherein like reference numerals indicate corresponding elements throughout the several views, and wherein:
FIG. 1 is a block diagram depicting an illustrative dedicated analog fax engine adapted to provide fax transmission over a standard PSTN;
FIG. 2 is a block diagram depicting an illustrative dedicated IP-aware fax engine;
FIG. 3 is a block diagram depicting an illustrative dedicated IP-aware fax engine used in a FoIP gateway application;
FIG. 4 is a block diagram depicting an exemplary universal fax engine, according to an embodiment of the present invention;
FIG. 5 is a block diagram depicting the exemplary universal fax engine shown in FIG. 4 used in an analog fax modem/machine implementation, according to an embodiment of the present invention;
FIG. 6 is a block diagram depicting the exemplary universal fax engine shown in FIG. 4 used in an IP-aware fax modem/machine implementation, according to an embodiment of the present invention;
FIG. 7 is a block diagram depicting the exemplary universal fax engine shown in FIG. 4 used in a FoIP gateway/analog telephone adapted (ATA) implementation for interfacing between an analog PSTN and an IP network, according to an embodiment of the present invention; and
FIG. 8 is a block diagram depicting an exemplary data processing system, according to an aspect of the present invention.

It is to be appreciated that elements in the figures are illustrated for simplicity and clarity. Common but well-understood elements that may be useful or necessary in a commercially feasible embodiment may not be shown in order to facilitate a less hindered view of the illustrated embodiments.

### Detailed Description of Preferred Embodiments

Principles of the present invention will be described herein in the context of illustrative embodiments of a universal facsimile engine adapted to be employed in both a public switch telephone network (PSTN) and an Internet Protocol (IP) network. It is to be appreciated, however, that the invention is not limited to the specific apparatus and methods illustratively shown and described herein. Rather, aspects of the invention are directed broadly to techniques for beneficially integrating features of two or more facsimile protocols. In this manner, aspects of the invention provide a single facsimile engine that can be beneficially used in a variety of applications using multiple protocols and/or data formats.

While illustrative embodiments of the invention will be described herein with reference to ITU-T T.30 and T.38 protocols, it is to be appreciated that the invention is not limited to use with these particular protocols. Rather, principles of the invention may be extended to essentially any facsimile communications protocol, both standard and non-standard. Moreover, it will become apparent to those skilled in the art given the teachings herein that numerous modifications can be made to the embodiments shown that are within the scope of the present invention. That is, no limitations with respect to the specific embodiments described herein are intended or should be inferred.

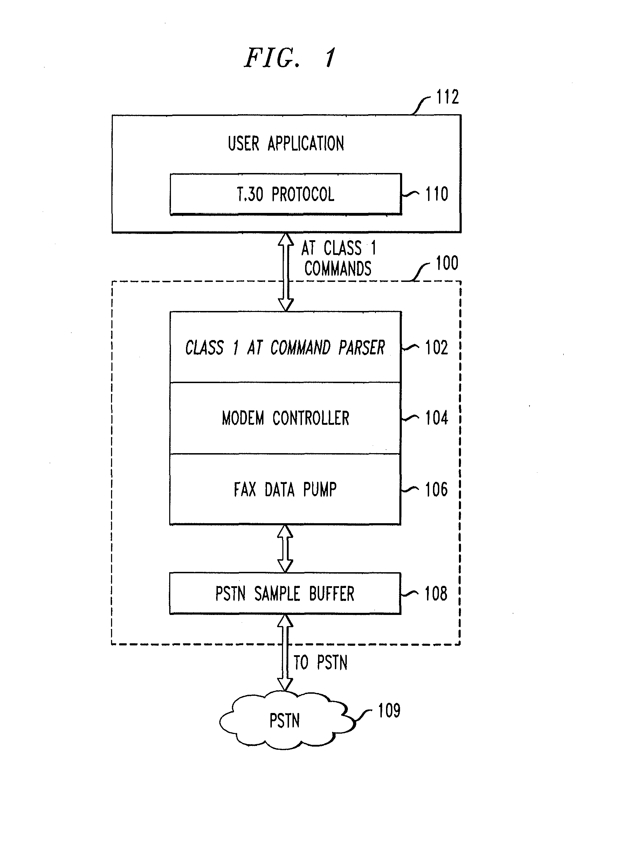

FIG. 1 is a block diagram depicting an illustrative dedicated analog fax engine 100. As apparent from the figure, analog fax engine 100 comprises a dedicated analog fax modem core including an AT command parser/interface 102 (class 1, class 2, or both class 1 and class 2), a modem controller 104 coupled to the command parser, and a fax data pump 106 coupled to the modem controller. The analog fax engine 100 preferably further includes a PSTN sample buffer 108 operatively coupled to the fax data pump 106. The PSTN sample buffer 108 is operative to provide an interface between the analog fax engine 100 and a traditional PSTN 109.

As is well known by those skilled in the art, particularly in the context of modem communications, an AT command is a command line sequence including a string of characters typically sent from data terminal equipment (DTE) to a modem or other data communication equipment (DCE) while the modem is in a command state. A command line preferably has a prefix, a body, and a terminator portion. Each command line (with the exception of the "A/" command) generally begins with the character sequence "AT" and is terminated by a carriage return. Characters that precede the AT prefix are ignored. The command line interpretation begins upon receipt of the ENTER key character. Characters within the command line are parsed as commands with associated parameter values. The basic commands consist of single ASCII characters, or single characters proceeded by a prefix character (e.g., "&" or "+"), followed by a decimal parameter. It is to be understood that the invention is not limited to use with AT commands or command lines in general.

Analog fax engine 100 may be controlled by one or more user applications 112 via an AT command interface with a well-defined set of AT commands, as specified, for example, in the ITU-T T.31 (Class 1) and ITU-T T.32 (Class 2) standards (see, e.g., ITU-T Recommendation T.31, Terminals for Telematic Services, Asynchronous Facsimile DCE Control - Service Class 1, Aug. 1995; and ITU-T Recommendation T.32, Terminals for Telematic Services, Asynchronous Facsimile DCE Control - Service Class 2, Aug. 1995, the disclosures of which are incorporated by reference herein in their entirety for all purposes), or an alternative control application. The user application 112 preferably employs a T.30 protocol 110 (if the system supports a class 1 interface), which may be implemented as part of the user application, for communicating with the analog fax engine 100. Conversely, the T.30 protocol may be implemented externally to the user application, such as by a proxy residing between the user application and the analog fax engine 100. Fax image data, representative of printed materials (e.g., text, photographs, or the like) to be transmitted, are sent through the AT interface to the analog fax engine 100, where they are properly formatted by the modem controller 104 and modulated by the fax data pump 106 for transmission via the PSTN 109.

As previously stated, with the prevalence of data communications over the Internet in general, and VoIP technology specifically, since fax transmissions generally utilize the same facilities as voice communications, it is becoming increasingly popular to implement fax transmissions over the Internet, for instance using FoIP. Two separate protocols enable fax transmissions to be sent effectively over an IP network; namely, the T.30 and T.38 protocols. The T.30 protocol was designed to be implemented over a network (e.g., PSTN) that provides relatively smooth and uninterrupted data flows. Unfortunately, however, the T.30 fax protocol using fax data pump 106 does not tolerate latency, jitter, and packet-loss, among other characteristics that are commonly encountered in an IP network. Moreover, compression often implemented by VoIP networks works well for speech (based on the limited frequency response of the human ear and our ability to "fill in the gaps" when certain sounds are missing from spoken words); however, distortion caused by compression and packetization can be enough to cause a T.30 transmission to fail at worst or to produce one or more erroneous image lines at best.

The T.38 fax protocol addresses at least a portion of the problems associated with sending and receiving faxes in real-time over a packet network. T.38 supports the transmission of fax data across an IP network in real time, much like the original Group 3 (G3) fax standards did for the traditional PSTN. In this manner, T.38 preserves the traditional fax environment and yet allows faxes to be successfully sent and received by dynamically adjusting the transmitted fax signal to compensate for jitter, latency, and packet loss, which are common in the IP network. Without T.38, fax devices, which are sensitive to timing, would otherwise experience difficulty reliably sending and receiving faxes over an IP network.

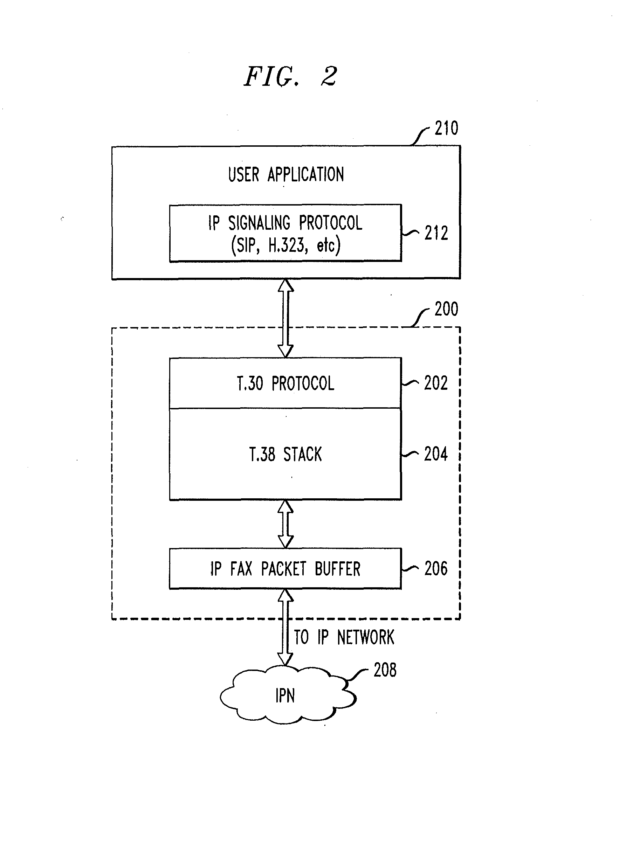

FIG. 2 is a block diagram depicting an illustrative dedicated IP-aware fax engine 200 adapted for providing fax communications over an IP network. The IP-aware fax engine 200, which may be implemented in an IP fax machine or other fax device, comprises a T.30 fax protocol stack 202 (if the system supports a class 2 interface) and a T.38 protocol stack 204 coupled to the T.30 fax protocol stack. Although depicted as separate functional units, it is to be appreciated that the T.30 fax protocol stack 202 and T.38 8 protocol stack may be integrated together within the same block, either alone or with other functional blocks (e.g., circuitry, software modules, etc.).

While not explicitly shown, the IP-aware fax engine 200 may further include a modem controller and fax data pump. In the IP network, an IP-based fax session may or may not require a modem controller and data pump, depending on the application employed. The IP-aware fax engine 200 further comprises an IP fax packet buffer 206, or alternative buffer. Buffer 206 is operative to provide an interface between the IP-aware fax engine 200 and an IP network (IPN) 208. Buffer 206 is preferably operative to receive data packets from the T.38 protocol stack 204 and reformat them for transmission over the IP network 208. Likewise, packets received from the IP network 208 by the buffer 206 are preferably reformatted by the buffer for use by the T.38 protocol stack 204.

IP-aware fax engine 200 may be controlled by one or more user applications 210 via an IP signaling protocol unit 212, or an alternative interface/control block. IP signaling protocol unit 212 preferably interfaces with the IP-aware fax engine 200, and sets up fax calls using a known communications protocol, such as, for example, Session Initiation Protocol (SIP), ITU-T H.323 (see, e.g., ITU-T Recommendation H.323, Series H: Audiovisual and Multimedia Systems, Infrastructure of audiovisual services - Systems and terminal equipment for audiovisual services, Packet-based multimedia communications systems, Dec. 2009, the disclosure of which is incorporated by reference herein in its entirety for all purposes), or an alternative control and/or signaling protocol. As previously stated, it is to be understood that the invention is not limited to use with any specific communications protocol(s).

The T.30 fax protocol stack 202 is operative to receive fax image data and/or control signals from, or transmit fax image data and/or controls signal to, user application 210. T.30 fax protocol stack 202 is preferably further operative to specify the procedures that a sending and receiving terminal use to set up a fax call, determine the image size, encoding, and transfer speed, the demarcation between pages, and/or the termination of the call, among other functions, according to the T.30 standard. The T.38 protocol stack 204 is operative to "fool" the terminal into thinking that it's communicating directly with another T.30 terminal. T.38 protocol stack 204, in conjunction with buffer 206, will also preferably correct for network delays with so-called spoofing techniques, and missing or delayed packets with fax-aware buffer-management techniques (e.g., store-and-forward processing).

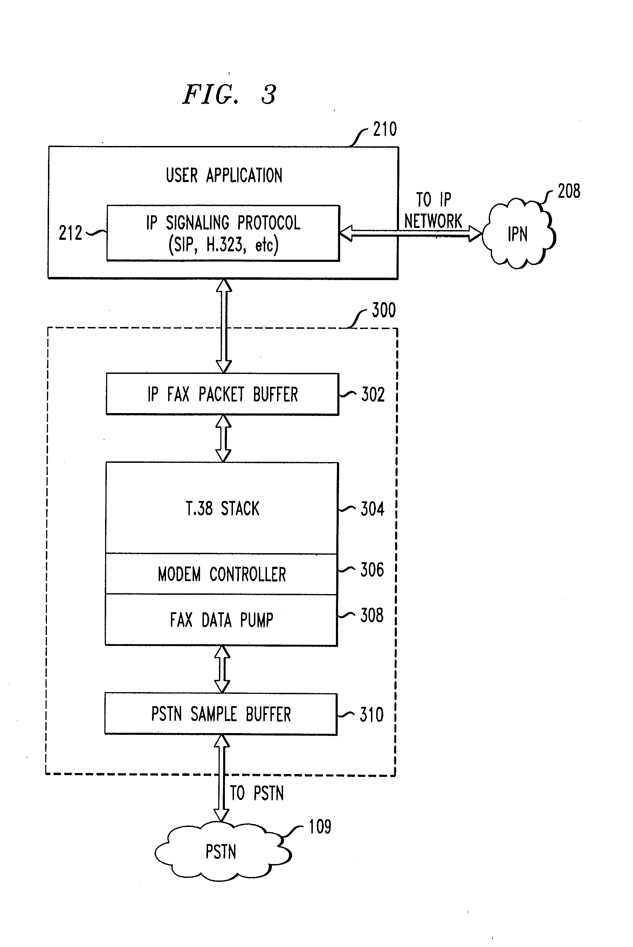

FIG. 3 is a block diagram depicting an illustrative dedicated IP-aware fax engine 300 used in a FoIP media gateway application. The term "gateway" as used herein is intended to broadly refer to a device, node or other functional unit operative in a communications network to interface with another network which uses different communications protocols. A gateway generally performs protocol translation/mapping for interconnecting networks with different network protocol technologies. In the present exemplary case, IP-aware fax engine 300 is operative to interface between a traditional PSTN 109, using, for example, a T.30 protocol, and IP network 208 via one or more user applications 210, using, for example, a T.38 protocol. User application 210 may employ an IP signaling protocol 212, such as, for example, SIP or H.323, as previously described.

Fax engine 300, like fax engine 200 shown in FIG. 2, comprises a T.38 protocol stack 304 and an IP fax packet buffer 302 operatively coupled to the T.38 protocol stack. IP fax packet buffer 302 is preferably operative to receive data packets from the T.38 protocol stack 304 and process (e.g., reformat) them for transmission to the IP network 208 via user application 210. Likewise, packets received from the IP network 208 by the IP fax packet buffer 302 (via user application 210) are preferably processed (e.g., reformatted) by the buffer for use by the T.38 protocol stack 304. In this manner, IP fax packet buffer 302 provides an interface between the IP-aware fax engine 300 and the IP network 208.

Additionally, fax engine 300, like the analog fax engine 100 shown in FIG. 1, comprises a modem controller 306 coupled to the T.38 protocol stack 304, a fax data pump 308 coupled to the modem controller, and a PSTN sample buffer 310 operatively coupled to the fax data pump. PSTN sample buffer 310 is preferably operative to receive data samples from the fax data pump 308 and process (e.g., reformat) them for transmission to the PSTN 109. Likewise, samples received from the PSTN 109 by the PSTN sample buffer 310 are preferably processed (e.g., reformatted) by the buffer for use by the fax data pump 308. In this manner, PSTN sample buffer 310 is operative to provide an interface between IP-aware fax engine 300 and the PSTN 109.

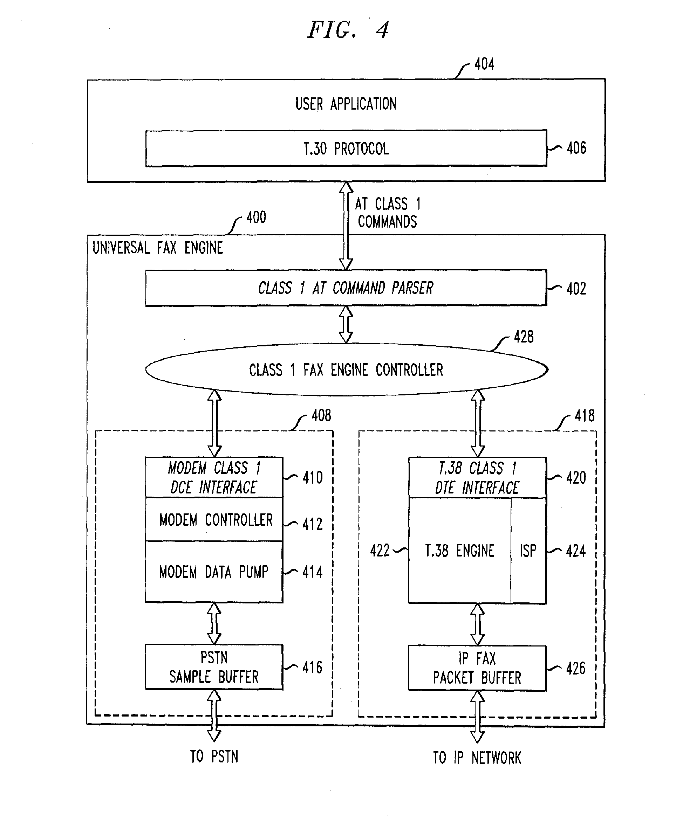

While a dedicated analog fax engine for providing fax transmission over a standard PSTN is known, as is a dedicated IP-aware fax engine for providing fax transmission over an IP network, embodiments of the present invention beneficially support multiple fax protocols (e.g., implementing functionalities of an analog fax engine and an IP-aware fax engine) integrated into a single fax engine. By way of example only, FIG. 4 is a block diagram depicting an exemplary universal fax engine 400, according to an embodiment of the invention. It is to be appreciated that while the universal fax engine 400 will be described in further detail below for a class 1 interface, this universal fax engine architecture can be similarly extended to a class 2 fax interface, as will become apparent to those skilled in the art given the teachings herein.

With reference to FIG. 4, for a class 1 AT command interface (e.g., ITU-T T.31), universal fax engine 400 comprises an AT command parser 402, or alternative interface. Command parser 402 preferably utilizes the same AT command interface and AT command set as used in an analog fax engine (e.g., illustrative analog fax engine 100 shown in FIG. 1). In this manner, the difference between operation as an analog fax versus an IP fax is essentially transparent to the user. A user application 404, which may implement a T.30 protocol 406 (e.g., software application or hardware circuitry), is preferably in operative communication with the universal fax engine 400.

The T.30 protocol 406 is preferably operative to control fax frames, image data, etc., under control of the user application 404. An advantage of this arrangement is that the user can control their own existing T.30 stack through the same standard AT command interface to control both analog fax and IP-based (e.g., T.38) fax. More particularly, the same user application as employed with the analog fax engine 100 shown in FIG. 1, including an AT command interface with a well-defined set of AT commands, for example, ITU-T T.31 (Class 1) and ITU-T T.32 (Class 2) standards, or an alternative control application, may be used to interface with universal fax engine 400. This enables end users to support both a PSTN fax session and an IP network fax session without any significant changes to their fax application software.

For communication with a traditional PSTN, universal fax engine 400 comprises an analog stack 408 including a modem class 1 data communication equipment (DCE) interface 410, a modem controller 412 coupled to the DCE interface, and a modem data pump 414 coupled to the modem controller. The modem data pump 414 is operatively coupled to a PSTN sample buffer 416. PSTN sample buffer 416, which serves as an interface to an analog PSTN, is operative to send and receive pulse-code modulation (PCM) samples to and from, respectively, the PSTN.

For communication with an IP network, universal fax engine 400 comprises an IP-aware stack 418 including a T.38 protocol class 1 data terminal equipment (DTE) interface 420, a T.38 protocol engine 422 coupled to the T.38 class 1 DTE interface, and an IP signaling protocol (ISP) module 424 in communication with the T.38 protocol engine and the T.38 class 1 DTE interface. The T.38 protocol engine 422 is operatively coupled to an IP fax packet buffer 426. IP fax packet buffer 426, which serves as an interface to an IP network, is operative to send and receive T.38 IP fax packets to and from, respectively, the IP network. This interface can be software based; that is, the physical IP interface (e.g., IP stocks) does not have to reside on the same chip as the T.38 stack (e.g., comprising T.38 class 1 DTE interface 420, T.38 protocol engine 422, and ISP module 424). The universal fax engine 400 can send/receive the IP fax packets to/from, respectively, either user application 404 or other hardware where an actual IP connection exists.

In the exemplary embodiment shown in FIG. 4, the universal fax engine 400 is operative to provide fax communications using two different protocols, namely, traditional Group 3 (using modem data pump 414) and T.38 protocols, for faxing over an analog PSTN and an IP network, respectively. It is to be appreciated, however, that the invention is not limited to any specific number of different protocols supported by the universal fax engine 400. For example, according to other embodiments, the universal fax engine may comprise one or more additional protocol stacks for relaying data traffic in other formats across analog and/or IP networks (e.g., ITU-T V.150.1 protocol for relaying modem traffic across IP networks -- modem over IP (MoIP), as specified in ITU-T Recommendation V.150.1, Series V: Data Communication Over the Telephone Network, Interworking with Other Networks, Modem-over-IP networks: Procedures for the End-to-end Connection of V-series DCEs, Jan. 2003, the disclosure of which is incorporate by reference herein in its entirety for all purposes.)

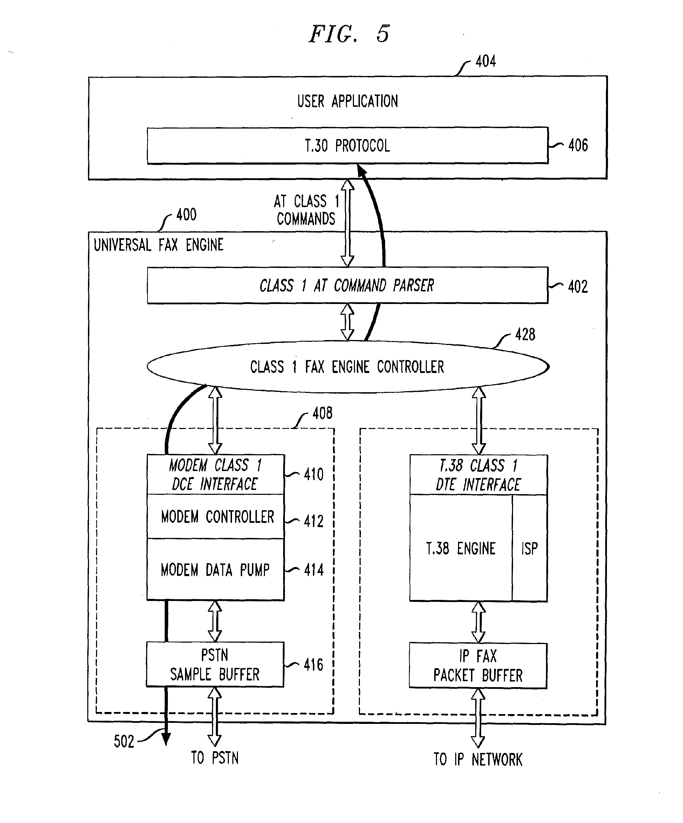

Universal fax engine 400 further includes a class 1 fax engine controller 428 coupled between the class 1 AT command parser 402 and the analog stack 408 and the IP-aware stack 418. Fax engine controller 428 is operative to control the mode of operation and/or state of the universal fax engine 400. Specifically, fax engine controller 428 is coupled to AT command parser 402, modem class 1 DCE interface 410 and T.38 class 1 DTE interface 420. There are at least three modes of operation for universal fax engine 400; namely, a first mode, which may be an analog fax modem mode, a second mode, which may be an IP-aware fax mode, and a third mode, which may be a FoIP gateway/ATA mode. Each of these illustrative modes of operation of universal fax engine 400 will be described in further detail below in conjunction with FIGS. 5-7.

FIG. 5 is a block diagram depicting the exemplary universal fax engine 400 shown in FIG. 4 used in an analog fax modem/machine implementation, according to an embodiment of the present invention. In this exemplary embodiment, the universal fax engine 400 is operative in a traditional analog fax modem/machine application, in which a data flow path 502 from/to user application 404 (e.g., employing a T.30 protocol 406), through AT command parser 402, through fax engine controller 428, through analog stack 408, to/from the PSTN. Specifically, in this mode of operation, modem data pump 414 connects to PSTN sample buffer 416 and is operative for modulating/demodulating signals to/from, respectively, a PSTN. The decoded data (e.g., T.30 control frame and image data) from modem controller 412 are sent to the user application 404 via a class 1 interface. This universal fax engine methodology and architecture can be similarly extended to a class 2 fax interface, as will become apparent to those skilled in the art given the teachings herein.

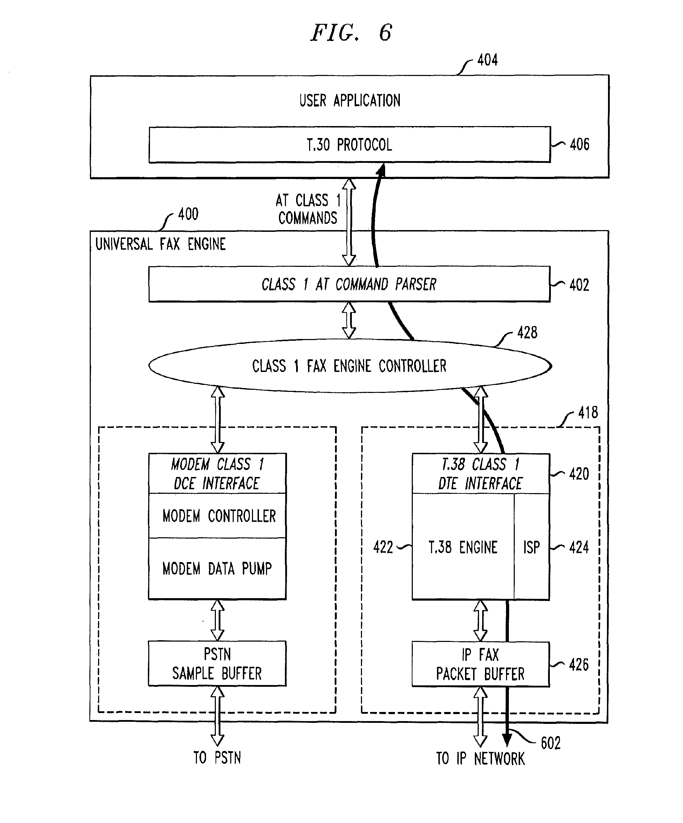

FIG. 6 is a block diagram depicting the exemplary universal fax engine 400 shown in FIG. 4 used in an IP-aware fax modem/machine implementation, according to an embodiment of the present invention. In this exemplary embodiment, the universal fax engine 400 is operative in an IP fax (e.g., FoIP) mode, in which a data flow path 602 from/to user application 404, through AT command parser 402, through fax engine controller 428, through IP-aware stack 418, to/from the IP network. Specifically, in this mode of operation, the universal fax engine has an established connection to an IP network, and the IP-aware (e.g., T.38) stack 418 is in operation (i.e., active).

In a receive direction, IP fax data packets from the IP network are decoded into regular T.30 messages, via the IP-aware stack 418, and sent to the user application 404 via the class 1 interface 402. In the transmit direction, T.30 data from user application 404 is encoded into proper T.38 IP fax packets, via IP-aware stack 418, and forwarded to the IP network. This mode is used by terminating T.38 devices, such as, for example, an IP-aware fax modem/machine. An IP network signaling protocol (e.g., SIP, H.323, etc.) can be used to setup a call, but such protocol need not reside in the fax engine 400. Rather, a user can invoke the signaling protocol elsewhere and simply pass the negotiated information to the fax engine.

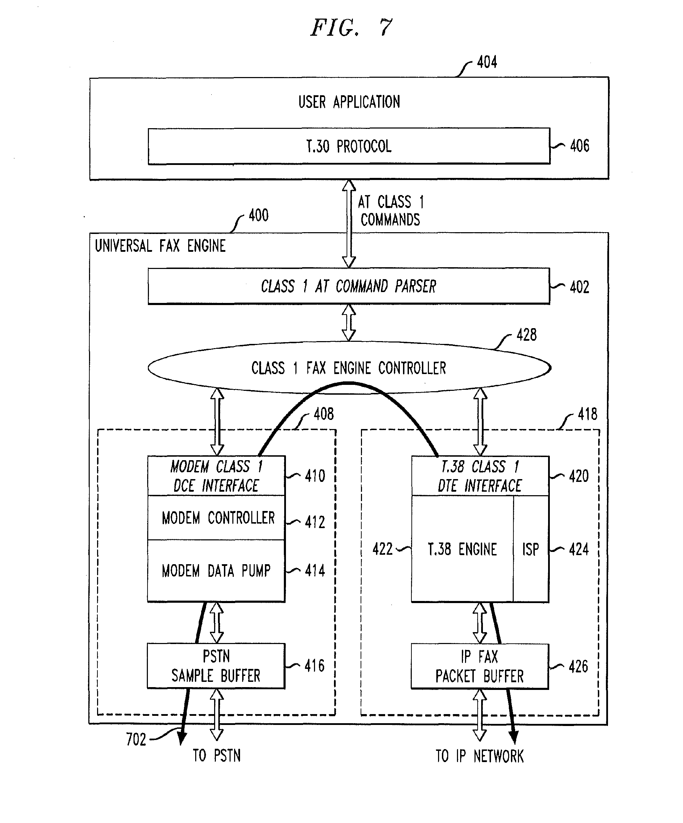

With reference now to FIG. 7, a block diagram depicts the exemplary universal fax engine 400 shown in FIG. 4 used in a FoIP gateway/ATA implementation for interfacing between an analog PSTN and an IP network, according to an embodiment of the invention. In this exemplary embodiment, both PSTN and IP connections are utilized. Specifically, in this mode of operation the universal fax engine 400 includes a data flow path 702 from/to a PSTN, through the analog stack 408, through fax engine controller 428, through IP-aware stack 418, to/from the IP network.

More particularly, in this mode of operation the fax engine functions as a media gateway or analog telephone adaptor. In a first direction (e.g., PSTN-to-IP network transfer), an analog signal received from the PSTN, via PSTN sample buffer 416, is demodulated and decoded by the analog stack 408 into T.30 data (or data in an alternate communications protocol). This decoded data is then sent, via the fax engine controller 428, to the IP-aware stack 418, where it is encoded into T.38 IP fax packets (or an alternate protocol) and sent out to the IP network. In a second direction (e.g., IP network-to-PSTN transfer), IP fax packets received from the IP network, via IP fax packet buffer 426, are decoded by the IP-aware stack 418 into T.30 messages (T.30 control frame and image data). The T.30 messages are then sent, via the fax engine controller 428, to the analog stack 408 where they are coded and modulated for transmission via the PSTN. An IP network signaling protocol (e.g., SIP, H.323, etc.) may be used to establish a FoIP call, but such protocol need not reside in the fax engine itself. A user can invoke the signaling protocol elsewhere and simply pass the negotiated information to the fax engine 400.

Modes of operation of the universal fax engine 400, or at least a subset thereof, are preferably controlled by way of an AT command interface, or alternative control/interface methodology. By way of illustration only and without loss of generality, embodiments of the invention provide an AT command set, *AT*+*fclass*=*nclass,* defining a new mode class, IP fax class. This class is assigned a number (e.g., 9) which is not currently used by any other mode of the traditional analog modem command set. For example, operational modes of the universal fax engine may be defined as follows:
*AT*+*fclass* = 9.1, IP-aware fax mode with class 1 (T.31) interface;
*AT*+*fclass* = 9.2, IP-aware fax mode with class 2 (T.32) interface;
*AT*+*fclass* = 9.3, FoIP gateway/ATA mode;
*AT*+*fclass* = 9.4, IP-aware data modem mode;
*AT*+*fclass* = 9.5, MoIP gateway/ATA mode.

The existing *AT*+*fclass*= commands preferably still function as in a traditional analog fax/data modem. For example, the following commands are operative with the universal fax engine:
*AT*+*fclass* = 0, traditional analog data modem mode;
*AT*+*fclass* = 1.0, traditional analog fax modem mode with class 1 interface;
*AT*+*fclass* = 2.0, traditional analog fax modem mode with class 2 interface.

The above exemplary command definitions are presented by way of illustration only. It is to be understood, however, that the invention is not limited to the specific command definitions shown and described herein. Rather, other and/or additional command definitions may be utilized, as will become apparent to those skilled in the art given the teachings herein.

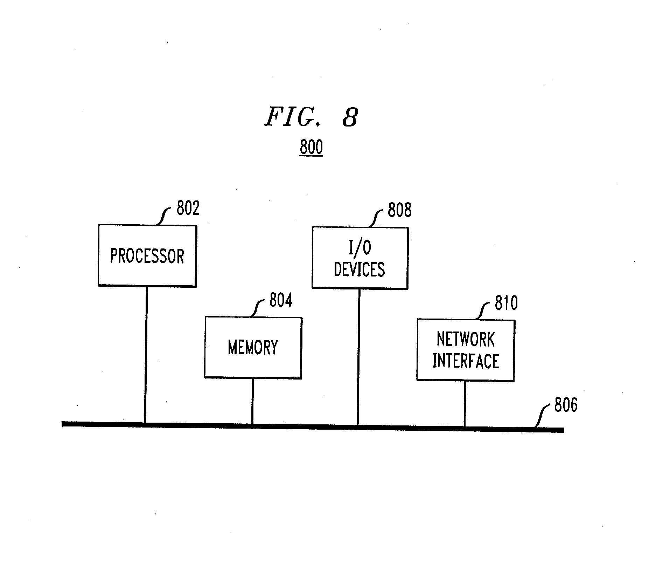

Methodologies of embodiments of the present invention may be particularly well-suited for implementation in an electronic device or alternative system, such as, for example, a network router/switch device. By way of illustration only, FIG. 8 is a block diagram depicting an exemplary data processing system 800, formed in accordance with an aspect of the invention. System 800 may represent, for example, a fax device (e.g., fax modem, fax machine, etc.) adapted for communicating with a PC and/or another fax device using, for example, a G3 and/or a T.38 communications protocol. System 800 may include a processor 802, memory 804 coupled to the processor, as well as input/output (I/O) circuitry 808 operative to interface with the processor. The processor 802, memory 804, and I/O circuitry 808 can be interconnected, for example, via a bus 806, or alternative connection means, as part of data processing system 800. Suitable interconnections, for example via the bus, can also be provided to a network interface 810, such as a network interface card (NIC), which can be provided to interface with a computer or IP network, and to a media interface, such as a diskette or CD-ROM drive, which can be provided to interface with media. The processor 802 may be configured to perform at least a portion of the methodologies of the present invention described herein above.

It is to be appreciated that the term "processor" as used herein is intended to include any processing device, such as, for example, one that includes a central processing unit (CPU) and/or other processing circuitry (e.g., network processor, DSP, microprocessor, etc.). Additionally, it is to be understood that the term "processor" may refer to more than one processing device, and that various elements associated with a processing device may be shared by other processing devices. The term "memory" as used herein is intended to include memory and other computer-readable media associated with a processor or CPU, such as, for example, random access memory (RAM), read only memory (ROM), fixed storage media (e.g., a hard drive), removable storage media (e.g., a diskette), flash memory, etc. Furthermore, the term "I/O circuitry" as used herein is intended to include, for example, one or more input devices (e.g., keyboard, mouse, etc.) for entering data to the processor, one or more output devices (e.g., printer, monitor, etc.) for presenting the results associated with the processor, and/or interface circuitry for operatively coupling the input or output device(s) to the processor.

Accordingly, an application program, or software components thereof, including instructions or code for performing the methodologies of the invention, as described herein, may be stored in one or more of the associated storage media (e.g., ROM, fixed or removable storage) and, when ready to be utilized, loaded in whole or in part (e.g., into RAM) and executed by the processor 802. In any case, it is to be appreciated that at least a portion of the components shown in FIG. 4 may be implemented in various forms of hardware, software, or combinations thereof, e.g., one or more DSPs with associated memory, application-specific integrated circuit(s), functional circuitry, one or more operatively programmed general purpose digital computers with associated memory, etc. Given the teachings of the invention provided herein, one of ordinary skill in the art will be able to contemplate other implementations of the components of the invention.

At least a portion of the techniques of the present invention may be implemented in one or more integrated circuits. In forming integrated circuits, die are typically fabricated in a repeated pattern on a surface of a semiconductor wafer. Each of the die includes a memory described herein, and may include other structures or circuits. Individual die are cut or diced from the wafer, then packaged as integrated circuits. One skilled in the art would know how to dice wafers and package die to produce integrated circuits. Integrated circuits so manufactured are considered part of this invention.

An IC in accordance with embodiments of the present invention can be employed in any application and/or electronic system which is adapted for providing fax communications (e.g., fax modem/machine). Suitable systems for implementing embodiments of the invention may include, but are not limited to, personal computers, portable communications devices (e.g., cell phones), fax devices, etc. Systems incorporating such integrated circuits are considered part of this invention. Given the teachings of the invention provided herein, one of ordinary skill in the art will be able to contemplate other implementations and applications of the techniques of the invention.

Although illustrative embodiments of the present invention have been described herein with reference to the accompanying drawings, it is to be understood that the invention is not limited to those precise embodiments, and that various other changes and modifications may be made therein by one skilled in the art without departing from the scope of the appended claims.

## Claims

1. A facsimile apparatus, comprising:
a user interface operative to facilitate communications between the apparatus and at least one user application in operative communication with the apparatus;
a network interface operative to facilitate communications between the apparatus and at least one of a plurality of communications networks coupled to the apparatus; and
a controller connected to the user interface and network interface, the controller being operative in a first mode to communicate with a first one of the communications networks using a first facsimile protocol and being operative in at least a second mode to communicate with a second one of the communications networks using a second facsimile protocol.

2. The apparatus of claim 1, wherein the controller is further operative in a third mode to facilitate communications between a first facsimile device coupled to the first one of the communications networks and a second facsimile device coupled to the second one of the communications networks, the controller being operative in the third mode to convert data received from the first one of the communications networks in the first facsimile protocol into the second facsimile protocol for transmission on the second one of the communications networks.

3. The apparatus of claim 2, wherein the first facsimile protocol is an analog facsimile protocol and the second facsimile protocol is an Internet Protocol (IP)-aware protocol.

4. The apparatus of claim 1, wherein the network interface comprises:
an analog stack including a modern data communication equipment (DCE) interface utilizing the first facsimile protocol, a modern controller coupled to the DCE interface, and a modem data pump coupled to the modem controller; and
an IP-aware stack including a data terminal equipment (DTE) interface utilizing the second facsimile protocol, a protocol engine coupled to the DTE interface, and an IP signalling protocol (ISP) module in communication with the protocol engine and the DTE interface.

5. The apparatus of claim 4, wherein the analog stack further comprises a sample buffer coupled to the modem data pump and adapted for communication with the first one of the communications networks.

6. The apparatus of claim 1, wherein the user interface comprises a command parser operative to at least one of: receive commands from the user application and convert said commands into one or more control signals utilized by the controller; and receive control signals from the network interface and convert said control signals into commands utilized by the user application.

7. The apparatus of claim 1, wherein the user interface is operative to receive at least one user command, one or more modes of operation of the controller being controlled as a function of the at least one user command.

8. The apparatus of claim 7, wherein the at least one user command comprises an AT command which defines an IP-aware facsimile class unused for analog facsimile transmissions.

9. An integrated circuit comprising at least one facsimile apparatus, the at least one facsimile apparatus comprising:
a user interface operative to facilitate communications between the apparatus and at least one user application in operative communication with the apparatus;
a network interface operative to facilitate communications between the apparatus and at least one of a plurality of communications networks coupled to the apparatus; and
a controller connected to the user interface and network interface, the controller being operative in a first mode to communicate with a first one of the communications networks using a first facsimile protocol and being operative in at least a second mode to communicate with a second one of the communications networks using a second facsimile protocol.

10. A method for facilitating facsimile communications using at least two facsimile protocols, the method comprising the steps of:
providing a first interface operative to facilitate communications between a facsimile device and at least one user application in operative communication with the facsimile device;
providing a second interface operative to facilitate communications between the facsimile device and at least one of a plurality of communications networks coupled to the facsimile device; and
communicating with a first one of the communications networks using a first facsimile protocol in a first mode of operation, and communicating with a second one of the communications networks using a second facsimile protocol in a second mode of operation.

11. The method of claim 10, further comprising the steps of:
Communicating between a first facsimile device coupled to the first one of the communications networks and a second facsimile device coupled to the second one of the communications networks in a third mode of operation; and
converting data received from the first one of the communications networks in the first facsimile protocol into the second facsimile protocol for transmission on the second one of the communications networks in the third mode of operation.

12. The method of claim 10, further comprising the steps of:
receiving one or more commands from the at least one user application; and
converting said one or more commands into one or more control signals utilized by the facsimile device.

13. The method of claim 10, further comprising the steps of:
receiving one or more control signals from the facsimile device; and
converting the one or more control signals into one or more commands utilized by the at least one user application.

14. The method of claim 10, further comprising the steps of:
the first interface receiving at least one user command; and
controlling one or more modes of operation of the facsimile device as a function of the at least one user command.

15. An electronic system, comprising:
a plurality of facsimile devices, each facsimile device being adapted for connection to a corresponding communications network; and
at least one facsimile apparatus, the at least one facsimile apparatus comprising:
a user interface operative to facilitate communications between the apparatus and at least one user application in operative communication with the apparatus;
a network interface operative to facilitate communications between the apparatus and at least one of a plurality of communications networks coupled to the apparatus and to at least one of the facsimile devices; and
a controller connected to the user interface and network interface, the controller being operative in a first mode to communicate with a first one of the communications networks using a first facsimile protocol and being operative in at least a second mode to communicate with a second one of the communications networks using a second facsimile protocol.
